# EUROPÄISCHE PATENTSCHRIFT

(11) **EP 4 655 180 B1**
(45) Veröffentlichungstag und Bekanntmachung des Hinweises auf die Patenterteilung: **07.10.2026**
(21) Anmeldenummer: 24706098.1
(22) Anmeldetag: 19.02.2024
(51) Int. Cl.: B60Q 1/50

(54) **KRAFTFAHRZEUG**
MOTOR VEHICLE
VÉHICULE À MOTEUR

(30) Priorität: 01.03.2023 DE 102023105028
(43) Veröffentlichungstag der Anmeldung: 03.12.2025
(73) Patentinhaber: AUDI AG, 85057 Ingolstadt (DE)
(72) Erfinder: RESCHKE, Johannes, 84085 Langquaid (DE)
(74) Vertreter: Lindner Blaumeier Patent- und Rechtsanwälte
(86) Internationale Anmeldenummer: PCT/EP2024/054098
(87) Internationale Veröffentlichungsnummer: WO 2024/179863

(56) Entgegenhaltungen:
- DE-A1- 102020 120 596
- DE-U1- 202010 013 761
- GB-A- 2 291 244
- US-A1- 2007 159 311
- US-A1- 2020 114 815

## Beschreibung

Die Erfindung betrifft ein Kraftfahrzeug, umfassend eine Abstandserfassungseinrichtung ausgebildet zur kontinuierlichen Erfassung des Abstands des Kraftfahrzeugs zu einem dahinter fahrenden weiteren Kraftfahrzeug, sowie wenigstens eine am Kraftfahrzeug rückseitig vorgesehene Leuchteinrichtung zur Gabe einer das Unterschreiten eines vorbestimmten Mindestabstands anzeigenden Leuchtinformation wobei
- die Größe der Leuchtinformation (8) mit zunehmender Unterschreitung des Mindestabstands (M) zunimmt und sich die Leuchtinformation (8) mit zunehmender Größe in Fahrzeugquerrichtung verbreitert,
- die Größe mit einer nachfolgenden abnehmenden Unterschreitung des Mindestabstands (M) abnimmt,
- die Größe stufenweise mit der zunehmenden oder abnehmenden Unterschreitung zunimmt oder abnimmt,
- und die Leuchteinrichtung (6) wenigstens zwei separate Leuchteinheiten (9a, 9b, 9c), aufweist, die heckseitig rechts und links angeordnet sind, über die Leuchtinformationen (8) gebbar sind, wobei eine Zunahme oder Abnahme der Größe der über die Leuchteinrichtung (6) dargestellten Leuchtinformationen (8) synchron gesteuert erfolgt, wobei
als Leuchtinformationen bei Unterschreiten des Mindestabstands jeweils rechts und links ein erstes Leuchtinformationssegment dargestellt wird.

Moderne Kraftfahrzeuge verfügen zumeist über eine Abstandserfassungseinrichtung, die dazu dient, den Abstand zu einem vor oder hinter dem Fahrzeug befindlichen Objekt zu erfassen. Dabei kann es sich um ein stehendes Objekt handeln, sodass die Abstandserfassungseinrichtung nach Art einer Einparkhilfe arbeitet. Es kann sich aber auch um die Erfassung des Abstands zu einem sich bewegenden Objekt, also vorausfahrenden oder hinterherfahrenden Kraftfahrzeug handeln, wobei über diese Abstandsdaten weitere Fahrassistenzsysteme gesteuert werden können. Eine Abstandserfassungseinrichtung umfasst einen oder mehrere entsprechende Abstandssensoren, beispielsweise Ultraschallsensoren, Radarsensoren oder Lidarsensoren, die an entsprechenden Positionen am Fahrzeug vorgesehen sind.

Aus DE 10 2018 221 351 A1 ist ein Kraftfahrzeug bekannt, das eine entsprechende Abstandserfassungseinrichtung aufweist, die in der Lage ist, den Abstand zu einem hinter dem eigenen Kraftfahrzeug fahrenden Fahrzeug zu erfassen. Zusätzlich weist dieses bekannte Kraftfahrzeug eine Leuchteinrichtung auf, die fahrzeugrückseitig vorgesehen ist, und an der einen sprechende Leuchtinformation zur Warnung des nachfolgenden Verkehrsteilnehmers ausgegeben werden kann, wenn über die Abstandserfassungseinrichtung erfasst wird, dass ein nachfolgendes Fahrzeug einen Mindestabstand zum eigenen Kraftfahrzeug erreicht oder unterschreitet.

Ein Kraftfahrzeug mit den eingangs genannten Merkmalen ist aus DE 20 2010 013 761 U1 bekannt.

WO 2006/095118 A1 beschreibt ein Fahrzeug, das über eine Rückleuchtenblende aus organischen Leuchtdioden verfügt. Bereiche der OLED-Blende können je nach Fahrverhalten des Fahrzeugführers beleuchtet werden, um die Leuchtenfunktionen anzuzeigen. Die OLED-Blende kann auch zur Anzeige von Warnmeldungen genutzt werden. Dabei kann die beleuchtete Fläche des Blende vergrößert erden.

US 2018/222424A1 beschreibt ein Fahrzeug, bei dem ebenfalls eine Warninformation angezeigt werden kann, die bei Annäherung eines weiteren Fahrzeugs vergrößert werden kann.

Der Erfindung liegt das Problem zugrunde, ein demgegenüber verbessertes Kraftfahrzeug anzugeben.

Zur Lösung dieses Problems ist bei einem Kraftfahrzeug der eingangs genannten Art erfindungsgemäß vorgesehen, dass mit zunehmender Annäherung jeweils rechts und links zumindest ein zusätzliches, separates Leuchtinformationssegment dargestellt wird, wobei das zumindest eine zusätzliche Leuchtinformationssegment seitlich versetzt zum und größer als das erste Leuchtinformationssegment ist, so dass sich die Leuchtinformationen jeweils zur Seite hin verbreitern.

Bei dem erfindungsgemäßen Kraftfahrzeug erfolgt eine adaptive Warnung des nachfolgenden Verkehrsteilnehmers in Abhängigkeit des Grads der Unterschreitung des definierten Mindestabstands. Der Abstand zum hinterherfahrenden Fahrzeug wird wie beschrieben kontinuierlich erfasst, sodass stets der Ist-Abstand bekannt ist. Unterschreitet das nachfahrende Fahrzeug einen definierten Mindestabstand, der beispielsweise in Abhängigkeit der Ist-Geschwindigkeit des eigenen Kraftfahrzeugs entsprechend angepasst wird, so wird über die Leuchteinrichtung eine Leuchtinformation ausgegeben, um diesen Umstand dem hinterherfahrenden Verkehrsteilnehmer zu signalisieren. Fährt dieser jedoch weiter auf, verkürzt sich also der Mindestabstand respektive nimmt die Unterschreitung zu, so wird die Leuchtinformation entsprechend angepasst und die Warnung intensiver bzw. auffälliger. Hierzu nimmt die

Größe der Leuchtinformation zu, das heißt, dass beispielsweise eine Leuchtfläche oder dergleichen vergrößert wird oder weitere Leuchtmittel o.dgl. zugeschaltet werden. Alternativ kann sowohl die Helligkeit als auch die Größe der Leuchtinformation zunehmen. Durch diese an den Grad der Unterschreitung des Mindestabstands adaptierte Erzeugung der Leuchtinformation kann folglich auf die sich ändernde Fahrsituation reagiert werden und, nachdem der nachfahrende Verkehrsteilnehmer möglicherweise die Unterschreitung des Mindestabstands nach der ersten Leuchtinformationsgabe nicht erkannt hat, der Warninhalt verbessert und der nachfolgende Verkehrsteilnehmer tatsächlich mit der Information erreicht werden.

Beim erfindungsgemäßen Kraftfahrzeug wird der nachfolgende Verkehrsteilnehmer folglich nicht nur ein einziges Mal respektive in einer einzigen Form gewarnt, vielmehr erfolgt eine situationsabhängige, adaptive Warnsignalgabe über die adaptierte Leuchtinformation.

Natürlich erfolgt die Adaption nicht nur in einer Richtung, also mit einer zunehmenden Größe und möglicherweise Helligkeit bei zunehmender Unterschreitung, sondern auch in die entgegengesetzte Richtung. Fährt also ein Fahrzeug entsprechend nahe auf, so wird die Größe und möglicherweise die Helligkeit entsprechend erhöht. Fällt das auffahrende Fahrzeug dann aber wieder ab und vergrößert sich der Abstand, so erfolgt quasi eine Rückwärtsadaption, die Größe und möglicherweise die Helligkeit werden wieder reduziert bzw., wenn das Fahrzeug aus dem Mindestabstandsbereich hinausfährt, entfällt die Leuchtinformation gänzlich.

Besonders zweckmäßig ist es, wenn eine Adaption nach Gabe einer ersten Leuchtinformation nicht nur einmalig erfolgt, sondern eine fortlaufende Adaption bei zunehmender Unterschreitung des Mindestabstands, also bei zunehmendem Auffahren, erfolgt. Hierzu kann gemäß einer nicht erfindungsgemäßen Ausführungsform vorgesehen sein, dass die Helligkeit und/oder die Größe mit der kontinuierlich zunehmenden Unterschreitung kontinuierlich zunimmt. Fährt das Fahrzeug also immer weiter auf, so wird die Leuchtinformation sukzessive immer heller respektive immer größer, das heißt, dass eine stufenlose Erhöhung der Helligkeit respektive Größe erfolgt. Gleiches gilt natürlich im Falle einer Abstandsvergrößerung, wenn also die Unterschreitung des Mindestabstands kontinuierlich abnimmt. In diesem Fall erfolgt auch eine kontinuierliche Rückführung der erhöhten Helligkeit respektive Größe.

Alternativ zu einer kontinuierlichen, also stufenlosen Adaption erfolgt erfindungsgemäß die Adaption der Größe und möglicherweise der Helligkeit stufenweise. Das heißt, dass die Größe und möglicherweise die Helligkeit stufenweise mit der zunehmenden stufenweisen Unterschreitung zunimmt oder, im umgekehrten Fall, auch abnimmt. Fährt das hinterherfahrende Kraftfahrzeug auf und unterschreitet den Mindestabstand, so wird die erste Leuchtinformation gegeben. Nähert sich das Fahrzeug beispielsweise um weitere 5m, so wird die erste Adaptionsstufe angesteuert, die Größe und möglicherweise die Helligkeit wird entsprechend um eine Stufe, also sprunghaft erhöht. Fährt das Fahrzeug weiter auf, beispielsweise erneut um 5m, wird eine zweite Adaptionsstufe angesteuert, die Größe und möglicherweise die Helligkeit wird wieder um eine Stufe, also sprunghaft erhöht. Bei weiterer Annäherung, beispielsweise erneut um 5m, wird die dritte Adaptionsstufe angesteuert, Größe und möglicherweise Helligkeit werden wieder um eine Stufe erhöht. Gleiches gilt im umgekehrten Fall mit einer zunehmenden Abstandsvergrößerung, wobei auch in diesem Fall in den entsprechenden Stufen die Größe und möglicherweise die Helligkeit wieder reduziert wird. Es erfolgt hier also eine stufenweise Adaption oder Variation, die rein optisch entsprechend auffällig ist, da sich die Größe und möglicherweise die Helligkeit mit jeder Stufe beachtlich sprunghaft ändern kann.

Nach einer nicht erfindungsgemäßen Ausführungsform ist eine rückseitig oder heckseitig vorgesehene Leuchteinrichtung zur Gabe der Leuchtinformation ausreichend. Beispielsweise kann hierzu eine in der Fahrzeugmitte vorgesehene, beispielsweise am oberen Rand der Heckschreibe befindliche Leuchteinrichtung, die als Rückleuchte oder als Bremsleuchte dient, verwendet werden. Erfindungsgemäß jedoch ist es, wenn die Leuchteinrichtung wenigstens zwei separate Leuchteinheiten aufweist, wobei die Zunahme oder Abnahme der Größe und möglicherweise der Helligkeit synchron gesteuert erfolgt. Diese Leuchteinrichtungen sind bei Kraftfahrzeugen üblicherweise heckseitig rechts und links vorgesehen und umfassen regelmäßig ein Bremslicht, zumeist auch ein Rücklicht, gegebenenfalls auch Blinker oder ein Rückfahrlicht und dergleichen. Moderne Leuchteinheiten sind häufig als Matrix-LED-Leuchten ausgebildet, die die Ansteuerung unterschiedliche Leuchtgeometrie oder Leuchtbilder erlauben, auch in unterschiedlichen Farben, sodass mit derartigen Leuchteinheiten die entsprechende Helligkeits- und/oder Größenadaption problemlos möglich ist.

Erfindungsgemäß verbreitet sich die Leuchtinformation mit zunehmender Größe in Fahrzeug Querrichtung**.** Hierüber nimmt einerseits die Größe zu, andererseits erscheint das Fahrzeug auch breiter, insbesondere bei Dunkelheit, wenn die Leuchtinformation sehr prominent ist.

Die Leuchteinrichtung selbst weist zweckmäßigerweise eine oder mehrere OLED-Lichtquellen auf, sie ist bevorzugt als Matrixscheinwerfer mit entsprechenden OLEDs ausgeführt. Diese Lichtquellen erlauben einerseits eine nahezu beliebige Ansteuerung hinsichtlich der Leuchtgeometrie und andererseits eine Adaption der Helligkeit in einem sehr weiten Bereich.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung einer ersten Fahrsituation mit einer ersten Abstand zwischen zwei Fahrzeugen, der größer als ein Mindestabstand ist,
- Fig. 2-4: nachfolgende Fahrsituationen mit zunehmender Annäherung des einen, hinterherfahrenden Kraftfahrzeugs an das andere Kraftfahrzeug unter zunehmende Unterschreitung des Mindestabstands sowie Darstellung der entsprechenden Leuchtinformationsgabe,
- Fig. 5: eine Prinzipdarstellung eines Leuchtmusters einer Rückleuchtanordnung ohne zusätzliche Leuchtinformation,
- Fig. 6: eine Prinzipdarstellung nach Fig. 5 mit einer Leuchtinformation bei Unterschreitung eines Mindestabstands, und
- Fig. 7 und 8: die Vergrößerung der Leuchtinformation mit zunehmender Annäherung.

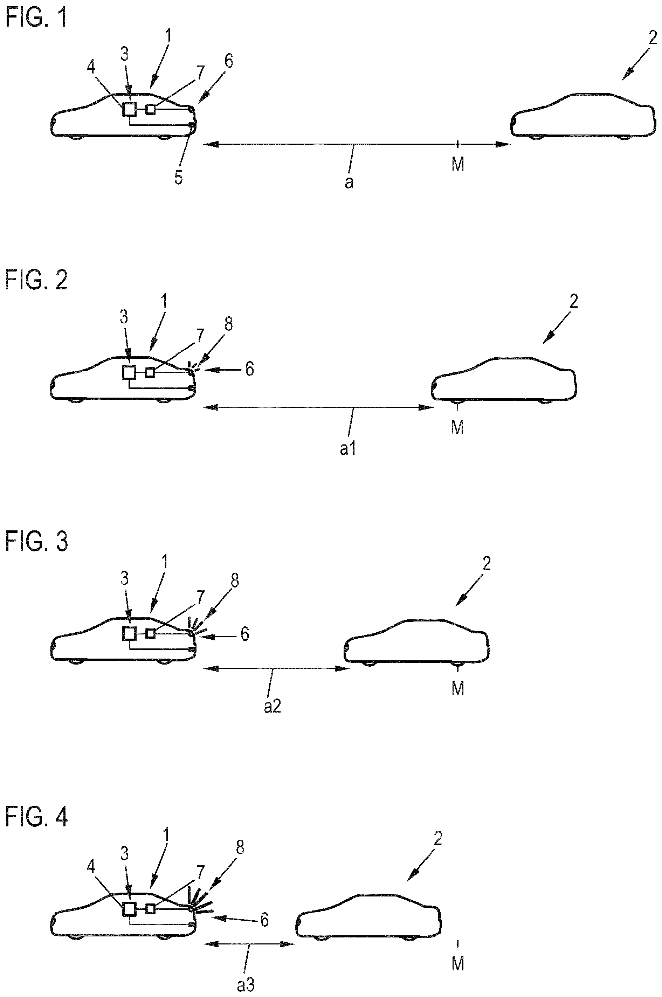

Fig. 1 zeigt ein erstes, vorausfahrendes erfindungsgemäßes Kraftfahrzeug 1 sowie ein hinter diesem fahrendes Kraftfahrzeug 2. Das Kraftfahrzeug 1 weist eine Abstandserfassungseinrichtung 3 mit einer Steuerungseinrichtung 4 sowie mit einem oder mehreren Abstandssensoren 5, die heckseitig verbaut sind, auf. Vorgesehen ist des Weiteren eine heckseitige Leuchteinrichtung 6, die beispielsweise zwei seitlich angeordnete Leuchteinheiten sowie eine zwischen diesen angeordnete Leuchteinheit aufweist. Die Ansteuerung der Leuchteinrichtung 6 erfolgt über eine Steuerungseinrichtung 7, die mit der Steuereinrichtung 4 des Abstandserfassungseinrichtung 3 kommuniziert.

Im Fahrbetrieb ist die Abstandserfassungseinrichtung 3 aktiv, es wird kontinuierlich der Ist-Abstand a, dargestellt durch den Doppelpfeil, zum nachfolgenden Kraftfahrzeug 2 ermittelt. Diese Ist-Abstand a ist beim Beispiel gemäß Fig. 1 größer als ein Mindestabstand M, der in Fig. 1 ebenfalls dargestellt ist. Diese Mindestabstand M berechnet sich vom eigenen Kraftfahrzeug 1 zum erfassten Kraftfahrzeug 2. Der Mindestabstand M ist bevorzugt geschwindigkeitsadaptiv. Je größer die eigene Fahrgeschwindigkeit ist, desto größer muss der Mindestabstand M sein, und umgekehrt.

Ausgehend von der Fahrsituation gemäß Fig. 1 nähert sich das Kraftfahrzeug 2 dem eigenen Kraftfahrzeug 1, der Ist-Abstand a1 ist kleiner als der Abstand a gemäß Fig. 1. Gleichzeitig unterschreitet das Kraftfahrzeug 2 den Mindestabstand M, wie Fig. 2 zeigt. Dies wird seitens der Abstandserfassungseinrichtung 3 erfasst, die ein entsprechendes Erfassungssignal an die Steuerungseinrichtung 7 gibt. Diese steuert daraufhin die Leuchteinrichtung 6 an, um eine Leuchtinformation 8 auszugeben, die dem Fahrer des Fahrzeugs 2 signalisieren soll, dass er entsprechend weit aufgefahren ist und den Mindestabstand M unterschritten hat. Die Leuchtinformation 8 ist ein Warnsignal, das den hinterherfahrenden Verkehrsteilnehmer über ein zu enges Auffahren informieren soll.

Im gezeigten Beispiel fährt das Kraftfahrzeug 2 jedoch noch weiter auf, der Ist-Abstand a2 ist wenig später kleiner als der vorherige Abstand a1, der Mindestabstand M ist noch weiter unterschritten. Dieses kontinuierliche Verringern des Abstands sowie das zunehmende Unterschreiten des Mindestabstands M wird kontinuierlich über die Abstandserfassungseinrichtung 3 erfasst. Die Steuerungseinrichtung 7, der die entsprechende Unterschreitungsinformation bekannt ist, steuert daraufhin die Leuchteinrichtung 6 an, dass die ausgegebene Leuchtinformation 8 heller und/oder größer ist, also auffälliger ist und ihr Warncharakter noch offensichtlicher ist. Dabei kann die entsprechende Ansteuerung respektive Adaption der Helligkeit und/oder Größe der Leuchtinformation 8 entweder kontinuierlich mit der kontinuierlich zunehmenden, und kontinuierlich erfassten Abstandsverringerung einhergehen, das heißt, dass die Leuchtinformation 8 stufenlos immer heller wird und/oder immer größer wird. Sie kann aber auch stufenweise erfolgen, das heißt, dass die zunehmende Annäherung in Stufen erfasst wird und mit Unterschreiten einer entsprechenden weiteren Stufe die Helligkeit und/oder Größe der Leuchtinformation 8 immer sprunghaft größer wird.

Ausgehend von Fig. 3 sei angenommen, dass, siehe Fig. 4, das Kraftfahrzeug 2 noch weiter auffährt, was wiederum über die Abstandserfassungseinrichtung 3 kontinuierlich erfasst wird. Die Steuereinrichtung 7 steuert darauf hin die Leuchteinrichtung 6 an, sodass die Leuchtinformation 8 noch heller und/oder noch größer wedergegeben wird, um den Fahrer des Fahrzeugs 2 noch intensiver zu warnen.

Natürlich erfolgt auch eine entsprechende Reduzierung einer angehobenen Helligkeit und/oder Größe, nämlich dann, wenn das Kraftfahrzeug 2 wieder zurückfällt, also beispielsweise, beginnend mit der Situation gemäß Fig. 4, sich der Abstand zum Kraftfahrzeug 1 sukzessive wieder verringert. In entsprechender Weise wird dann auch die Helligkeit und/oder Größe der Leuchtinformation 8 wieder kontinuierlich oder stufenweise reduziert.

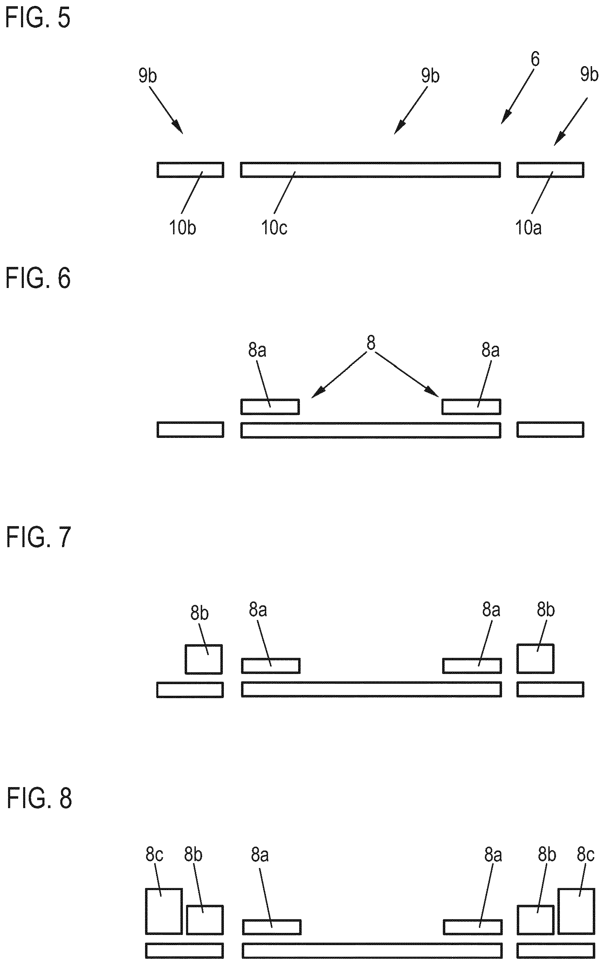

Fig. 5 zeigt ein Ausführungsbeispiel einer Leuchteinrichtung 6, wie sie kraftfahrzeugseitig vorgesehen ist. Diese umfasst im gezeigten Beispiel 3 separate Leuchteinheiten 9a, 9b und 9c, wobei die Leuchteinheiten 9a, 9b seitlich positioniert sind, während die Leuchteinheit 9c dazwischen angeordnet ist. Bei den Leuchteinheiten 9a - 9c handelt es sich bevorzugt um OLED-Leuchten, die matrixartig aufgebaut sind und entsprechend angesteuert werden können, um unterschiedliche Leuchtgeometrie darzustellen respektive in ihrer Helligkeit breitbandig adaptiert werden können.

Fig. 5 zeigt die Situation, in der das Kraftfahrzeug 1 beispielsweise nur mit eingeschaltetem Licht bei Dunkelheit unterwegs ist. Die Leuchteinheiten 9a - 9c emittieren ein jeweiliges Rückleuchtsignal 10a, 10b, 10c. Diese Beleuchtung ist im Falle der Fig. 1 gegeben.

Nähert sich nun das Kraftfahrzeug, wie in Fig. 2 dargestellt, und unterschreitet es den Mindestabstand M, so wird in diesem Fall zuerst seitens der Leuchteinrichtung 9c eine Leuchtinformation 8 dargestellt, umfassend ein erstes Leuchtinformationssegment 8a, hier beispielsweise in Form eines Leuchtbalkens, wie in Fig. 6 gezeigt.

Mit zunehmender Annäherung, entsprechend Fig. 3, wird hier schrittweise oder stufenweise ein zusätzliches zweites Leuchtinformationssegment 8b angesteuert, das seitlich versetzt ist und deutlich größer ist als das Leuchtinformationssegment 8a, sodass sich insgesamt die Leuchtinformation zur Seite hin verbreitet, wie in Fig. 7 gezeigt.

Bei weiter zunehmender Annäherung, entsprechend Fig. 4, wird ein drittes Leuchtinformationssegment 8c angesteuert und dargestellt, das wiederum deutlich größer und breiter als das Leuchtinformationssegment 8b ist, siehe Fig. 8.

Die Leuchtinformationssegmente 8a - 8c können gleich hell oder auch unterschiedlich hell sein, das heißt, dass die Leuchtinformationssegmente 8a eine erste Helligkeit, die Leuchtinformationssegmente 8b eine höhere zweite Helligkeit und die Leuchtinformationssegmente 8c eine nochmals höhere dritte Helligkeit aufweisen. Auch kann mit jedem Zuschalten eines weiteren Leuchtinformationssegment die Helligkeit alle Leuchtinformationssegmente insgesamt erhöht werden oder ähnliches.

Die Fig. 5 - 8 zeigen lediglich eine Prinzipdarstellung einer möglichen Leuchtinformationsgeometrie respektive einer entsprechenden, hier rechteckigen Geometrie der Leuchtinformationssegmente 8a-8c. Natürlich können diese auch beliebig in ihrer Geometrie sein, beispielsweise rundlich oder strich- oder linienförmig. Auch müssen keine separaten Leuchtsegmente pro Seite dargestellt werden, es kann auch pro Seite nur eine einzige, sich sukzessive oder stufenweise vergrößerndes Leuchtinformation dargestellt werden und ähnliches. Insbesondere bei Verwendung entsprechender Matrix-OLED-Leuchteinheiten ist dies problemlos möglich. Selbstverständlich ist auch ein entsprechendes Blinken oder Pulsieren und ähnliche, die Aufmerksamkeit fördernde Leuchtvariationen denkbar.

Natürlich erfolgt bei entsprechender Abstandsvergrößerung eine entsprechende Rücknahme der Leuchtinformationsdarstellung, das heißt, dass sukzessive im gezeigten Beispiel die Leuchtinformationssegmente 8a - 8c auch wieder abgeblendet werden.

## Patentansprüche

1. Kraftfahrzeug, umfassend eine Abstandserfassungseinrichtung (3) ausgebildet zur kontinuierlichen Erfassung des Abstands (a, a1, a2, a3) des Kraftfahrzeugs (1) zu einem dahinter fahrenden weiteren Kraftfahrzeug (2), sowie wenigstens eine am Kraftfahrzeug (1) rückseitig vorgesehene Leuchteinrichtung (6) zur Gabe einer das Unterschreiten eines vorbestimmten Mindestabstands (M) anzeigenden Leuchtinformation (8), wobei
- die Größe der Leuchtinformation (8) mit zunehmender Unterschreitung des Mindestabstands (M) zunimmt und sich die Leuchtinformation (8) mit zunehmender Größe in Fahrzeugquerrichtung verbreitert,
- die Größe mit einer nachfolgenden abnehmenden Unterschreitung des Mindestabstands (M) abnimmt,
- die Größe stufenweise mit der zunehmenden oder abnehmenden Unterschreitung zunimmt oder abnimmt,
- und die Leuchteinrichtung (6) wenigstens zwei separate Leuchteinheiten (9a, 9b, 9c), aufweist, die heckseitig rechts und links angeordnet sind, über die Leuchtinformationen (8) gebbar sind, wobei eine Zunahme oder Abnahme der Größe der über die Leuchteinrichtung (6) dargestellten Leuchtinformationen (8) synchron gesteuert erfolgt,
wobei als Leuchtinformationen bei Unterschreiten des Mindestabstands (M) jeweils rechts und links ein erstes Leuchtinformationssegment (8a) dargestellt wird,
**dadurch gekennzeichnet, dass**
mit zunehmender Annäherung jeweils rechts und links zumindest ein zusätzliches, separates Leuchtinformationssegment (8b, 8c) dargestellt wird, wobei das zumindest eine zusätzliche Leuchtinformationssegment (8b, 8c) seitlich versetzt zum und größer als das erste Leuchtinformationssegment (8a) ist, so dass sich die Leuchtinformationen jeweils zur Seite hin verbreitern.

2. Kraftfahrzeug nach Anspruch 1,
**dadurch gekennzeichnet,**
**dass** neben dem ersten und dem zweiten Leuchtinformationssegment (8a, 8b) bei weiter zunehmender Annäherung jeweils rechts und links ein separates drittes Leuchtinformationssegment (8c) dargestellt wird, wobei das dritte Leuchtinformationssegment (8c) seitlich versetzt zum und größer als das zweite Leuchtinformationssegment (8b) ist.

3. Kraftfahrzeug nach Anspruch 1 oder 2,
**dadurch gekennzeichnet,**
**dass** zusätzlich auch die Helligkeit der Leuchtdarstellung zunimmt.

4. Kraftfahrzeug nach einem der vorangehenden Ansprüche,
**dadurch gekennzeichnet,**
**dass** die Leuchteinrichtung (6) eine oder mehrere OLED-Lichtquellen aufweist.

## Claims

1. Motor vehicle, comprising a distance detection device (3) designed to continuously detect the distance (a, a1, a2, a3) between the motor vehicle (1) and a further motor vehicle (2) driving behind it, and at least one lighting device (6) provided on the rear of the motor vehicle (1) for presenting luminous information (8) indicating the undershooting of a predetermined minimum distance (M), wherein
- the size of the luminous information (8) increases as the undershooting of the minimum distance (M) increases, and the luminous information (8) widens in the transverse direction of the vehicle as the size increases,
- the size decreases as the undershooting of the minimum distance (M) subsequently decreases,
- the size increases or decreases step by step as the undershooting increases or decreases,
- and the lighting device (6) has at least two separate lighting units (9a, 9b, 9c) which are arranged at the rear on the right and left and via which luminous information (8) can be presented, wherein an increase or decrease in the size of the luminous information (8) displayed via the lighting device (6) takes place in a synchronously controlled manner,
wherein a first luminous information segment (8a) is displayed both on the right and left as luminous information when the minimum distance (M) is undershot, **characterized in that** at least one additional, separate luminous information segment (8b, 8c) is displayed both on the right and left with increasing propinquity, wherein the at least one additional luminous information segment (8b, 8c) is laterally offset with respect to and larger than the first luminous information segment (8a), so that the luminous information widens to the side in each case.

2. Motor vehicle according to Claim 1,
**characterized**
**in that**, besides the first and second luminous information segments (8a, 8b), a separate third luminous information segment (8c) is displayed both on the right and left upon further increasing propinquity, wherein the third luminous information segment (8c) is laterally offset with respect to and larger than the second luminous information segment (8b).

3. Motor vehicle according to Claim 1 or 2,
**characterized**
**in that** the brightness of the luminous display additionally increases as well.

4. Motor vehicle according to any of the preceding claims,
**characterized**
**in that** the lighting device (6) has one or more OLED light sources.

## Revendications

1. Véhicule à moteur, comprenant un dispositif de détection de distance (3) conçu pour détecter en continu la distance (a, a1, a2, a3) du véhicule à moteur (1) par rapport à un autre véhicule à moteur (2) circulant derrière celui-ci, et au moins un dispositif d'éclairage (6) prévu à l'arrière du véhicule à moteur (1) pour présenter des informations d'éclairage (8) affichant le passage en dessous d'une distance minimale (M) prédéterminée, dans lequel
- la taille de l'information d'éclairage (8) augmente avec un passage accru en dessous de la distance minimale (M) et l'information d'éclairage (8) s'élargit dans la direction transversale du véhicule avec l'augmentation de la taille,
- la taille diminue avec une diminution ultérieure du passage en dessous de la distance minimale (M),
- la taille augmente ou diminue progressivement avec l'augmentation ou la diminution du passage en dessous de la distance minimale,
- et le dispositif d'éclairage (6) comporte au moins deux unités d'éclairage séparées (9a, 9b, 9c), disposées à l'arrière à droite et à gauche, par l'intermédiaire desquelles des informations d'éclairage (8) peuvent être présentées, une augmentation ou une diminution de la taille des informations d'éclairage (8) représentées par le dispositif d'éclairage (6) s'effectuant de manière commandée et synchrone,
dans lequel, en tant qu'informations d'éclairage, lors du passage en dessous de la distance minimale (M), un premier segment d'information d'éclairage (8a) est représenté respectivement à droite et à gauche,
**caractérisé en ce qu'**au moins un segment d'information d'éclairage supplémentaire séparé (8b, 8c) est représenté avec un rapprochement croissant respectivement à droite et à gauche, ledit au moins un segment d'information d'éclairage supplémentaire (8b, 8c) étant décalé latéralement par rapport au premier segment d'information d'éclairage (8a) et plus grand que celui-ci, de sorte que les informations d'éclairage s'élargissent respectivement vers le côté.

2. Véhicule à moteur selon la revendication 1,
**caractérisé en ce que**
outre le premier et le deuxième segment d'information d'éclairage (8a, 8b), un troisième segment d'information d'éclairage (8c) séparé est représenté respectivement à droite et à gauche avec un rapprochement croissant, le troisième segment d'information d'éclairage (8c) étant décalé latéralement par rapport au deuxième segment d'information d'éclairage (8b) et plus grand que celui-ci.

3. Véhicule à moteur selon la revendication 1 ou 2, **caractérisé en ce que**
la luminosité de la représentation lumineuse augmente également.

4. Véhicule à moteur selon l'une des revendications précédentes,
**caractérisé en ce que**
le dispositif d'éclairage (6) comporte une ou plusieurs sources lumineuses OLED.
